# EUROPEAN PATENT APPLICATION

(11) **EP 2 677 689 A2**
(43) Date of publication of application: **25.12.2013**
(21) Application number: 11783043.0
(22) Date of filing: 30.05.2011
(51) Int. Cl.: H04L 12/24

(54) **METHOD, APPARATUS AND SYSTEM FOR NETWORK DEVICE CONFIGURATION**

(71) Applicant: Huawei Technologies Co., Ltd., Shenzhen, Guangdong 518129 (CN)
(72) Inventor: YIN, Zhidong, Shenzhen Guangdong 518129 (CN); WANG, Xiaoyang, Shenzhen Guangdong 518129 (CN); ZHANG, Xudong, Shenzhen Guangdong 518129 (CN)
(74) Representative: Goddar, Heinz J.
(86) International application number: PCT/CN2011/074920
(87) International publication number: WO 2011/144126

(57) **Abstract**

The present invention discloses a method, an apparatus and a system for configuring a network device, where the method includes: obtaining, by a configuration server, attribute information of a new device; and delivering, by the configuration server, configuration information of the new device, where the configuration information of the new device is determined according to the attribute information, to the new device, so that the new device performs device configuration according to the configuration information. The present invention further provides a configuration server, a new device, an uplink device and a device configuration system. The technical solutions of the present invention not only have network interoperability, but also greatly simplify IPV6 network deployment, thus reducing network configuration costs.

## Description

### TECHNICAL FIELD

The present invention relates to the field of communications technologies, and in particular to a method, an apparatus and a system for configuring a network device.

### BACKGROUND

A process of setting up a new network may be usually divided into steps such as hardware installation and device configuration. In most cases, the steps of hardware installation and device configuration do not occur at the same time. That is to say, when finishing the hardware installation, installation personnel do not directly perform device configuration on the device. In most cases, for device configuration, expert configuration engineers need to enter an equipment room to perform network device configuration.

At present, a solution adopted in the network device configuration mainly is to perform remote configuration through a DHCP (Dynamic Host Configuration Protocol, dynamic host configuration protocol) mechanism.

In such a manner, a new network device is like a host, and initiates a DHCP request, which arrives at a DHCP server through a pre-configured DHCP relay (relay) in the network. The DHCP server performs address allocation. A packet for the address allocation performed by the DHCP server carries information of a configuration server. Therefore, after receiving the packet for the address allocation, the new network device can obtain the information of the configuration server, and the new network device can initiate a configuration request to the configuration server.

When the foregoing DHCP mechanism is adopted to perform the network device configuration, the DHCP server needs to be deployed. Because the management and maintenance of the DHCP server are complex and the cost is also high, configuration costs of the network are greatly increased.

### SUMMARY

Objectives of the present invention are to provide a method, an apparatus and a system for configuring a network device, which not only have network interoperability and a wide application scope, but also can reduce network configuration costs and improve network configuration efficiency.

Technical solutions of the present invention include:

An embodiment of the present invention provides a method for configuring a network device, where the method includes:
obtaining, by a configuration server, attribute information of a new device;
determining configuration information of the new device according to the attribute information of the new device; and
delivering, by the configuration server, the configuration information of the new device to the new device, so that the new device performs device configuration according to the configuration information.

An embodiment of the present invention provides a configuration server, including:
an information obtaining module (51), configured to obtain attribute information of a new device;
a configuration processing module (52), configured to determine configuration information of the new device according to the attribute information; and
a configuration delivery module (53), configured to deliver the configuration information of the new device to the new device, so that the new device performs device configuration according to the configuration information.

An embodiment of the present invention provides a new device, including:
a notification module (61), configured to send attribute information of the new device to a configuration server, or advertise an uplink device, so that the uplink device sends the attribute information of the new device to the configuration server;
a receiving module (62), configured to receive configuration information delivered by the configuration server; and
a configuration module (63), configured to perform device configuration according to the configuration information.

An embodiment of the present invention provides an uplink device, including:
an obtaining module (71), configured to obtain attribute information of a new device; and
an advertisement module (72), configured to send an advertisement to a configuration server, where the advertisement includes the attribute information of the new device.

An embodiment of the present invention provides a device configuration system, including the configuration server, the new device and the uplink device.

According to the technical solutions provided in the embodiments of the present invention, by obtaining the attribute information of the new device, the configuration server can determine the configuration information of the new device according to the attribute information, and deliver the configuration information to the new device, thus implementing device configuration of the new device. When the technical solutions provided by the present invention are used, because no DHCP server is disposed, IPV6 network deployment is greatly simplified, thus saving network deployment costs of maintenance and management of the DHCP server. The technical solutions are highly compatible and widely applicable, which improves working efficiency in the device configuration process in the network.

### BRIEF DESCRIPTION OF DRAWINGS

FIG. 1 is a flow chart of a method for configuring a network device according to an embodiment of the present invention;

FIG. 2 is a diagram of an application scenario according to an embodiment of the present invention;

FIG. 3 is a diagram of an application scenario according to an embodiment of the present invention;

FIG. 4 is a diagram of an application scenario according to an embodiment of the present invention;

FIG. 5 is a schematic structural diagram of a configuration server according to an embodiment of the present invention;

FIG. 6 is a schematic structural diagram of a new device according to an embodiment of the present invention;

FIG. 7 is a schematic structural diagram of an uplink device according to an embodiment of the present invention; and

FIG. 8 is a schematic structural diagram of a device configuration system according to an embodiment of the present invention.

### DESCRIPTION OF EMBODIMENTS

Embodiments of the present invention provide a method, an apparatus and a system for configuring a network device. By obtaining attribute information of a new device (New Device), a configuration server (Configuration server) can determine configuration information of the new device according to the attribute information, and deliver the configuration information to the new device, thus implementing device configuration of the new device. By adopting the technical solutions of the present invention, the new device that newly accesses the network can automatically set up a remote channel with the configuration server, and implement automatic configuration of the device, thus saving procedures of configuration and management of a DHCP server and a DHCP Relay, enable the network to have strong interoperability and a wide application range, improving network configuration efficiency, and reducing network configuration costs.

It should be noted that, the term "include" adopted in the embodiments specifies the existence of the feature, the whole, step, operation, component and/or part, and does not exclude the existence or addition of one or more other features, the whole, steps, operations, components, parts and/or a group of other features, the whole, steps, operations, components and parts.

In the embodiments of the present invention, the "new device" involved refers to a network device that newly accesses the network without being configured.

"The uplink device of the new device" refers to a device that already exists in the network, is only one hop away from the new device on an IP route, and can communicate normally with the configuration server.

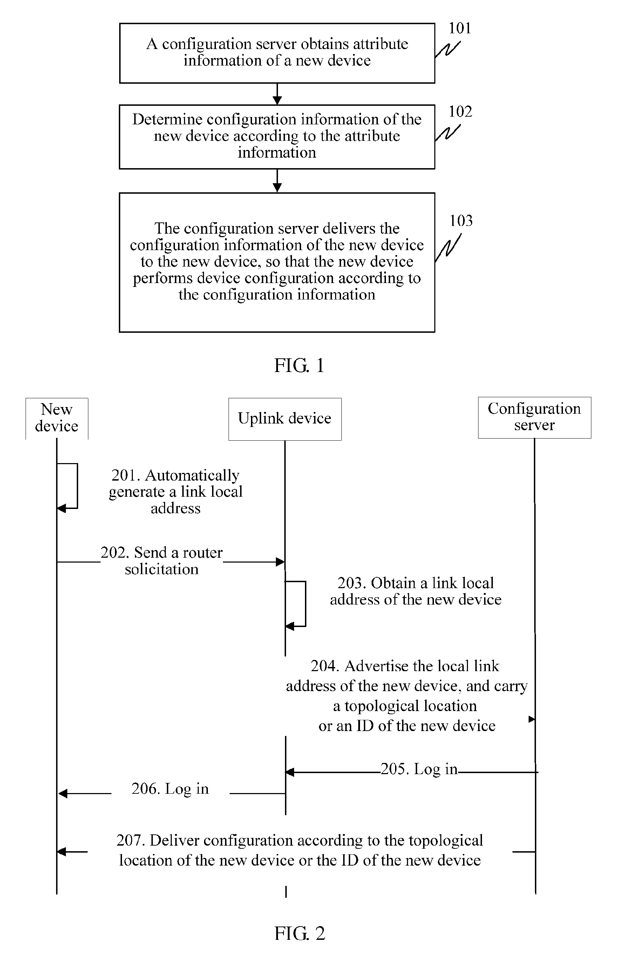

As shown in FIG. 1, an embodiment of the present invention provides a method for configuring a network device, where the method includes:

100: A configuration server obtains attribute information of a new device.

101: Determine configuration information of the new device according to the attribute information.

102: The configuration server delivers the configuration information of the new device to the new device, so that the new device performs device configuration according to the configuration information.

In the embodiment of the present invention, the content of the device configuration performed by the new device according to the configuration information includes: network element configuration of the new device and user service configuration of the new device.

In an optional specific implementation manner, the obtaining, by the configuration server, the attribute information of the new device in 101 may specifically include:
receiving, by the configuration server, a configuration advertisement sent by an uplink device of the new device, where the configuration advertisement includes the attribute information of the new device.

Exemplarily, the attribute information of the new device may include a link local address (Link Local address) of the new device and at least one piece of the following information: a topological location of the uplink device of the new device and an ID of the new device.

The link local address is generated according to an automatic generation mechanism of an IPV6 link local address when the new device is powered on. After generating the link local address, the new device sends a routing solicitation (RS) carrying the link local address to the uplink device, and the uplink device may obtain, from the RS, the link local address of the new device.

The topological location of the uplink device may be information such as an ID of the uplink device, an IP of the uplink device, a name of the uplink device, or an identification of an interface where the uplink device and the new device are connected. The topological location of the uplink device indicates topological information between the uplink device and the new device, so that the configuration server can determine, according to the topological location of the uplink device, the configuration information delivered to the new device.

The ID of the new device may be indicated by any one of an MAC address of the new device, an ESN electronic label, and a device ID configured for the new device when the new device leaves the factory.

Optionally, the delivering, by the configuration server, the configuration information to the new device in 102 specifically includes:
logging in to, by the configuration server, the uplink device, logging in to the new device through the uplink device according to the link local address, and delivering the configuration information of the new device.

In another optional specific implementation manner, the obtaining, by the configuration server, the attribute information of the new device in 101 may specifically include:
receiving, by the configuration server, a configuration request sent by the new device, where the configuration request includes the attribute information of the new device, and a source IP address of the configuration request is an IP address of the new device.

Exemplarily, the IP address of the new device is generated by the new device according to an address prefix and an ID of a local interface. Furthermore, optionally, the generating, by the new device, the IP address of the new device according to the address prefix and the ID of the local interface may include:
powering on the new device, and generating, by the new device, a link local address according to an automatic generation mechanism of an IPV6 link local address;
communicating, by the new device, with the uplink device according to the link local address, to obtain a prefix allocated by the uplink device to the new device and information of the configuration server; for example, the new device may send an RS to the uplink device according to the link local address; the uplink device returns to the new device an RA carrying the prefix allocated to the new device and the information of the configuration server, where the information of the configuration server may be information such as an IP address of the configuration server; and
generating, by the new device, the IP address of the new device according to the address prefix allocated by the uplink device and the ID of the local interface, so that the new device may communicate with the configuration server according to the generated IP address.

Exemplarily, the attribute information of the new device may include at least one piece of the following information: a topological location of the uplink device and an ID of the new device. The topological location of the uplink device may be information such as an ID of the uplink device, an IP of the uplink device, a name of the uplink device or an identification of an interface where the uplink device and the new device are connected. The information may be obtained during an interaction process between the new device and the uplink device (for example, a process where the new device interacting with the uplink device to obtain the prefix). Because the new device is powered on, the topological location of the uplink device may include a topological location of the new device. The ID of the new device may be indicated by any one of an MAC address of the new device, an ESN electronic label, and a device ID configured for the new device when the new device leaves the factory.

Optionally, the delivering, by the configuration server, the configuration information to the new device in 103 specifically includes:
communicating, by the configuration server, with the new device according to the IP address of the new device, and delivering the configuration information to the new device, where the configuration information is determined by the configuration server according to the attribute information of the new device.

For example, when communicating with the new device, the configuration server uses the IP address of the new device as a destination IP address.

In another optional specific implementation manner, the obtaining, by the configuration server, the attribute information of the new device in 101 may specifically include:
receiving, by the configuration server, a configuration advertisement sent by an uplink device of the new device, where the configuration advertisement includes the attribute information of the new device and an IP address of the new device.

Exemplarily, the attribute information of the new device may include at least one piece of the following information: a topological location of the uplink device and an ID of the new device. Examples of the topological location of the uplink device and examples of the ID of the new device are described in the foregoing, and are not be repeatedly described here.

Exemplarily, the IP address of the new device is generated by the new device according to an address prefix and an ID of a local interface. Furthermore, optionally, the generating, by the new device, the IP address of the new device according to the address prefix and the ID of the local interface may include:
powering on the new device, and generating, by the new device, a link local address according to an automatic generation mechanism of an IPV6 link local address;
communicating, by the new device, with the uplink device according to the link local address, to obtain a prefix allocated by the uplink device to the new device; for example, the new device may send an RS to the uplink device according to the link local address; the uplink device returns to the new device an RA carrying the prefix allocated to the new device; and
generating, by the new device, the IP address of the new device according to the address prefix allocated by the uplink device and the ID of the local interface.

The new device may communicate with the uplink device according to the generated IP address, and advertise the ID of the new device to the uplink device. For example, the new device may send a neighbor advertisement (NA) carrying the ID of the new device to the uplink device, where a source IP address of the NA is the IP address of the new device. The uplink device may obtain the ID of the new device and the IP address of the new device according to the received NA.

After obtaining the ID of the new device and the IP address of the new device, the uplink device may send a configuration advertisement to the configuration server.

Optionally, the delivering, by the configuration server, the configuration information to the new device in 103 specifically includes:
communicating, by the configuration server, with the new device according to the IP address of the new device, and delivering the configuration information to the new device, where the configuration information is determined by the configuration server according to the attribute information of the new device.

For example, when communicating with the new device, the configuration server uses the IP address of the new device as a destination IP address.

It can be seen from the technical solution provided in the foregoing embodiment that, by obtaining the attribute information of the new device, the configuration server can determine the configuration information of the new device according to the attribute information, and deliver the configuration information to the new device, thus implementing device configuration of the new device. To implement the embodiment of the present invention, no DHCP server needs to be deployed, so that IPV6 network deployment is greatly simplified, thus saving network deployment costs of maintenance and management of the DHCP server.

To make the embodiment of the present invention clearer, some specific scenarios are described in the following.

Scenario 1 is as shown in FIG. 2, and includes:

201: When a new device is powered on, the new device generates a link local address according to an IPV6 protocol.

It should be noted that, the link local address is only visible to a device directly connected to the new device, and a route is not generated and spread into the network. That is to say, the link local address is invisible to an indirectly-connected device, and is only limited to local communication.

202: The new device sends a routing solicitation (RS) carrying the link local address to an uplink device, to inform the uplink device that the new device needs device configuration.

203: The uplink device obtains the link local address of the new device from the routing solicitation.

204: The uplink device sends a configuration advertisement to a configuration server, so that the configuration server can obtain the link local address of the new device and one piece of the following information: topological information of the uplink device and an ID of the new device.

205: The configuration server logs in to the uplink device.

206: According to the link local address of the new device, the configuration server logs in to the new device through the uplink device.

In 205 and 206, remote login may be implemented through a local communication agent manner, and may be specifically implemented through a manner of telnet.

207: The configuration server determines configuration information of the new device in preplanned configuration information according to the topological location of the uplink device or the ID of the new device, and delivers the configuration information to the new device, so that the new device performs device configuration on itself according to the configuration information.

It can be seen from the application scenario shown in FIG. 2 that, after the uplink device advertises, to the configuration server, the link local address of the new device and the topological location of the uplink device, or the link local address of the new device and the ID of the new device, the configuration server may directly perform configuration on the new device by adopting a manner of remote login, which greatly simplifies a network structure and reduces costs of network construction.

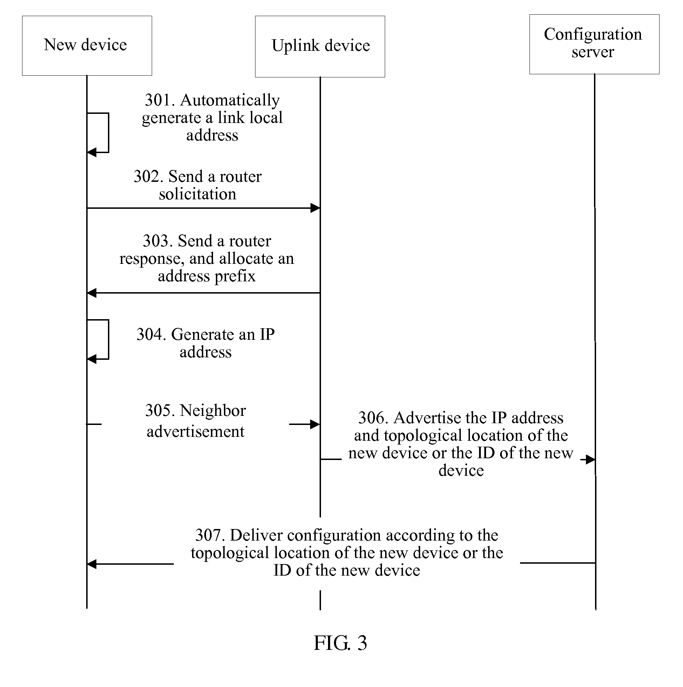

Scenario 2 is as shown in FIG. 3, and includes:

301: When a new device is powered on, the new device generates a link local address according to an automatic generation mechanism of a link local address in an IPV6 protocol.

It should be noted that, the link local address in FIG. 3 has the same meaning as the link local address in FIG. 2, and is only limited to local communication.

302: The new device sends a routing solicitation (RS) carrying the link local address to an uplink device, to inform the uplink device that the new device needs device configuration.

303: The uplink device makes a routing response (RA) to the new device in response to the routing solicitation, where the routing response carries an address prefix allocated to the new device.

The allocating, by the uplink device, the address prefix to the new device is implemented by adopting a stateless address allocation mechanism in the IPV6 protocol. The address prefix allocated to the new device is pre-configured on the uplink device. When the new device is powered on, the stateless address allocation is performed through ND (Neighbor Discovery, neighbor notice) to form a global unique address. A network route generated by the uplink device is spread into the network. At this time, the new device uses itself as a host, and uses the uplink device as a default gateway. The configuration server may set up a remote channel with the new device to implement device configuration at this time.

304: The new device generates, according to the address prefix and an ID of an interface, an IP address that can be used for network communication.

305: The new device sends a neighbor advertisement (NA) to the uplink device, where the NA carries an IP address of the new device and an ID of the new device.

306: When discovering that the new device needs device configuration, the uplink device carries the IP address of the new device and the topological location of the uplink device, or the IP address of the new device and the ID of the new device, and advertises, to the configuration server, that configuration should be performed on the new device.

307: After receiving the advertisement of the uplink device, the configuration server determines configuration information of the new device in preplanned configuration information according to the topological location of the uplink device or the ID of the new device, and delivers the configuration information to the new device by using the IP address of the new device as a destination address, so that the new device performs device configuration on itself according to the configuration information.

It should be noted that, the topological location of the uplink device and the ID of the new device described in FIG. 3 have the same meaning as the description in FIG. 2.

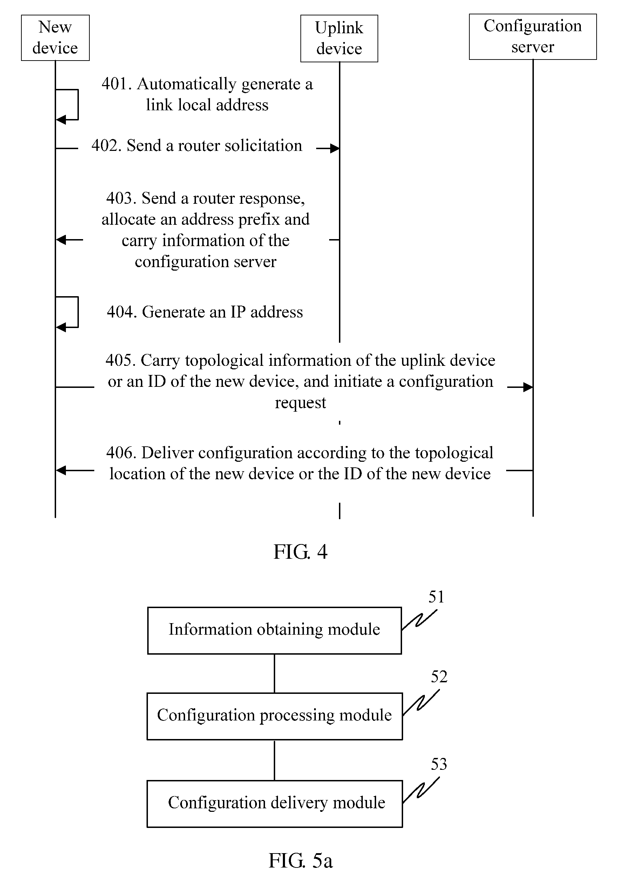

Scenario 3 is as shown in FIG. 4, and includes:

401: When a new device is powered on, the new device generates a link local address according to an automatic generation mechanism of a link local address in an IPV6 protocol.

It should be noted that, the link local address in FIG. 4 has the same meaning as the link local address in FIG. 3, and is only limited to local communication.

402: The new device sends a routing solicitation (RS) carrying the link local address to an uplink device, to inform the uplink device that the new device needs device configuration.

403: The uplink device makes a routing response(RA) to the new device in response to the routing solicitation, and meanwhile carries, in the routing response, an address prefix allocated to the new device and information of a configuration server.

404: The new device generates, according to the address prefix and an ID of an interface, an IP address that can be used for network communication.

405: The new device carries a topological location of the uplink device or an ID of the new device according to the generated IP address and the information of the configuration server, and sends a configuration request to the configuration server.

406: The configuration server receives the configuration request, determines configuration information of the new device in preplanned configuration information according to the topological location of the uplink device or the ID of the new device, and delivers the configuration information to the new device by using the IP address of the new device as a destination address, so that the new device performs device configuration on itself according to the configuration information.

It should be noted that, the topological location of the uplink device and the ID of the new device described in FIG. 4 have the same meaning as the description of FIG. 2 and FIG. 3.

As shown in FIG. 5a, an embodiment of the present invention provides a configuration server, including:
an information obtaining module 51, configured to obtain attribute information of a new device;
a configuration processing module 52, configured to determine configuration information of the new device according to the attribute information; and
a configuration delivery module 53, configured to deliver the configuration information of the new device to the new device, so that the new device performs device configuration according to the configuration information.

In the embodiment of the present invention, the content of the device configuration performed by the new device according to the configuration information includes: network element configuration of the new device and user service configuration of the new device.

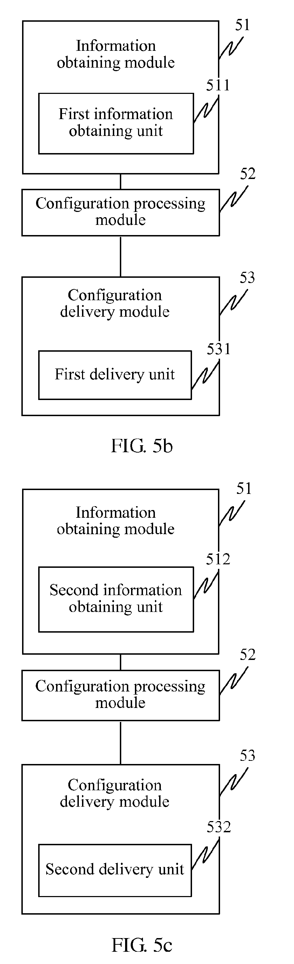

In an optional specific implementation manner, as shown in FIG. 5b, the information obtaining module 51 may include:
a first information obtaining unit 511, configured to receive a configuration advertisement sent by an uplink device of the new device, where the configuration advertisement includes the attribute information of the new device, and the attribute information of the new device may include a link local address of the new device and at least one piece of the following information: a topological location of the uplink device of the new device and an ID of the new device.

The configuration delivery module 53 may include:
a first delivery unit 531, configured to log in to the uplink device, log in to the new device through the uplink device according to the link local address, and deliver the configuration information of the new device.

In another optional specific implementation manner, as shown in FIG. 5c, the information obtaining module 51 may include:
a second information obtaining unit 512, configured to receive a configuration request sent by the new device, where the configuration request includes the attribute information of the new device, a source IP address of the configuration request is an IP address of the new device, and the attribute information of the new device may include at least one piece of the following information: a topological location of the uplink device and an ID of the new device.

The configuration delivery module 53 may include:
a second delivery unit 532, configured to communicate with the new device according to the IP address of the new device and deliver the configuration information to the new device.

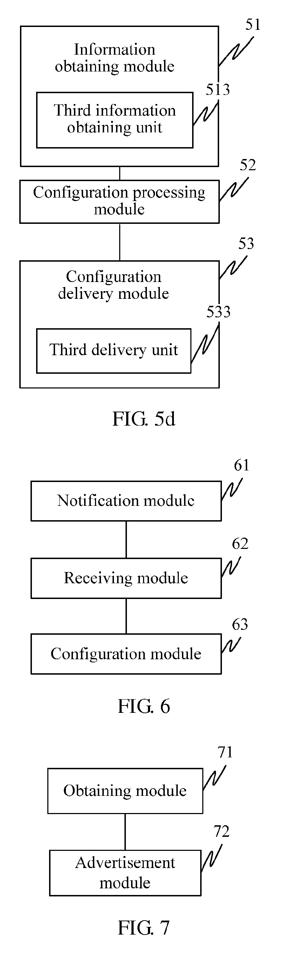

In another optional specific implementation manner, as shown in FIG. 5d, the information obtaining module 51 may include:
a third information obtaining unit 513, configured to receive a configuration advertisement sent by an uplink device of the new device, where the configuration advertisement includes the attribute information of the new device and an IP address of the new device, and the attribute information of the new device may include at least one piece of the following information: a topological location of the uplink device and an ID of the new device.

The configuration delivery module 53 may include:
a third delivery unit 533, configured to communicate with the new device according to the IP address of the new device and deliver the configuration information to the new device.

It can be seen from the technical solution provided in the foregoing embodiment that, the configuration server can obtain the attribute information of the new device through the information obtaining module, determine the configuration information of the new device according to the attribute information through the configuration processing module, and deliver the configuration information to the new device through the configuration delivery module, thus implementing the device configuration of the new device. To implement the embodiment of the present invention, no DHCP server needs to be deployed, thus greatly simplifying IPV6 network deployment and saving network deployment costs of maintenance and management of the DHCP server.

As shown in FIG. 6, an embodiment of the present invention provides a new device, including:
a notification module 61, configured to send attribute information of the new device to a configuration server, or advertise an uplink device, so that the uplink device sends the attribute information of the new device to the configuration server;
a receiving module 62, configured to receive configuration information delivered by the configuration server; and
a configuration module 63, configured to perform device configuration according to the configuration information.

As shown in FIG. 7, an embodiment of the present invention provides an uplink device, including:
an obtaining module 71, configured to obtain attribute information of a new device; and
an advertisement module 72, configured to send an advertisement to a configuration server, where the advertisement includes the attribute information of the new device.

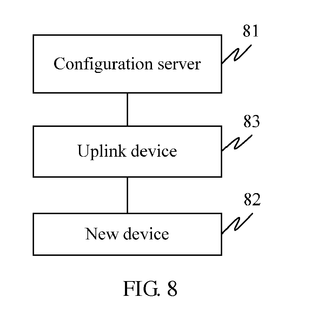

As shown in FIG. 8, an embodiment of the present invention provides a device configuration system, including a configuration server 81, a new device 82, and an uplink device 83, where
the new device 82 is configured to send attribute information of the new device 82 to the configuration server 81, or advertise the uplink device 83, so that the uplink device 83 sends the attribute information of the new device 82 to the configuration server 81, and perform device configuration according to configuration information delivered by the configuration server 81;
the uplink device 83 is configured to obtain the attribute information of the new device 82, and send an advertisement of performing device configuration on the new device 82 to the configuration server 81, where the advertisement includes the attribute information of the new device 82; and
the configuration server 81 is configured to obtain the attribute information of the new device 82, where the attribute information is used to determine the configuration information of the new device 82, and deliver the configuration information of the new device 82 to the new device 82.

Optionally, the configuration server 81 may be any one of the configuration servers shown in FIG. 5a to FIG. 5d. The new device 82 may be the new device shown in FIG. 6. The uplink device 83 may be the uplink device shown in FIG. 7.

In the method, the apparatus and the system for configuring a network device according to the embodiments of the present invention, network deployment of the solution is easy, which greatly simplifies IPV6 network deployment and saves deployment costs. Meanwhile, a remote channel between the new device and the configuration server can be set up, and device configuration does not need to be performed on spot, thus improving device configuration efficiency.

Persons of ordinary skill in the art should understand that all or part of the processes of the method according to the embodiments of the present invention may be implemented by a program instructing relevant hardware. The program may be stored in a computer readable storage medium. When the program is run, the processes of the method according to the embodiments of the present invention are performed. The storage medium may be a magnetic disk, an optical disk, a read-only memory (Read-Only Memory, ROM) or a random access memory (Random Access Memory, RAM).

## Claims

1. A method for configuring a network device, comprising:
obtaining, by a configuration server, attribute information of a new device;
determining configuration information of the new device according to the attribute information of the new device;
delivering, by the configuration server, the configuration information of the new device to the new device, so that the new device performs device configuration according to the configuration information.

2. The method according to claim 1, wherein the obtaining, by the configuration server, the attribute information of the new device comprises:
receiving, by the configuration server, a configuration advertisement sent by an uplink device, wherein the configuration advertisement comprises the attribute information, and the attribute information comprises a link local address of the new device and at least one piece of the following information: a topological location of the uplink device of the new device and an ID of the new device.

3. The method according to claim 2, wherein before the receiving, by the configuration server, the configuration advertisement sent by the uplink device, the method comprises:
generating, by the new device, the link local address;
sending, by the new device, a routing solicitation carrying the link local address to the uplink device;
obtaining, by the uplink device, the local link address of the new device; and
sending, by the uplink device, the configuration advertisement to the configuration server.

4. The method according to claim 2 or 3, wherein the delivering, by the configuration server, the configuration information to the new device comprises:
logging in to, by the configuration server, the uplink device, logging in to the new device through the uplink device according to the link local address, and delivering the configuration information.

5. The method according to claim 1, wherein the obtaining, by the configuration server, the attribute information of the new device comprises:
receiving, by the configuration server, a configuration request sent by the new device, wherein the configuration request comprises the attribute information of the new device, a source IP address of the configuration request is an IP address of the new device, and the attribute information comprises at least one piece of the following information: a topological location of the uplink device of the new device and an ID of the new device.

6. The method according to claim 5, wherein before the receiving, by the configuration server, the configuration request sent by the new device, the method comprises:
generating, by the new device, a link local address;
communicating, by the new device, with the uplink device according to the link local address, to obtain a prefix allocated by the uplink device to the new device and information of the configuration server; and
generating, by the new device, the IP address of the new device according to the address prefix allocated by the uplink device and an ID of a local interface.

7. The method according to claim 5 or 6, wherein the delivering, by the configuration server, the configuration information to the new device comprises:
communicating, by the configuration server, with the new device according to the IP address of the new device and delivering the configuration information to the new device.

8. The method according to claim 1, wherein the obtaining, by the configuration server, the attribute information of the new device comprises:
receiving, by the configuration server, a configuration advertisement sent by an uplink device of the new device, wherein the configuration advertisement comprises the attribute information of the new device and an IP address of the new device, and the attribute information comprises at least one piece of the following information: a topological location of the uplink device of the new device and an ID of the new device.

9. The method according to claim 8, wherein before the receiving, by the configuration server, the configuration advertisement sent by the uplink device of the new device, the method comprises:
generating, by the new device, a link local address;
communicating, by the new device, with the uplink device according to the link local address, to obtain a prefix allocated by the uplink device to the new device;
generating, by the new device, the IP address of the new device according to the address prefix allocated by the uplink device and an ID of a local interface; and
communicating, by the new device, with the uplink device according to the generated IP address, and advertising the ID of the new device to the uplink device.

10. The method according to claim 8 or 9, wherein the delivering, by the configuration server, the configuration information to the new device comprises:
communicating, by the configuration server, with the new device according to the IP address of the new device and delivering the configuration information to the new device.

11. A configuration server, comprising:
an information obtaining module (51), configured to obtain attribute information of a new device;
a configuration processing module (52), configured to determine configuration information of the new device according to the attribute information; and
a configuration delivery module (53), configured to deliver the configuration information of the new device to the new device, so that the new device performs device configuration according to the configuration information.

12. The configuration server according to claim 11, wherein the information obtaining module (51) comprises:
a first information obtaining unit (511), configured to receive a configuration advertisement sent by an uplink device of the new device, wherein the configuration advertisement comprises the attribute information of the new device, and the attribute information of the new device may comprise a link local address of the new device and at least one piece of the following information: a topological location of the uplink device of the new device and an ID of the new device; and
the configuration delivery module (53) comprises:
a first delivery module (531), configured to log in to the uplink device, log in to the new device through the uplink device according to the link local address, and deliver the configuration information of the new device.

13. The configuration server according to claim 11, wherein the information obtaining module (51) comprises:
a second information obtaining unit (512), configured to receive a configuration request sent by the new device, wherein the configuration request comprises the attribute information of the new device, a source IP address of the configuration request is an IP address of the new device, and the attribute information of the new device may comprise at least one piece of following information: a topological location of the uplink device and an ID of the new device; and
the configuration delivery module (53) comprises:
a second delivery unit (532), configured to communicate with the new device according to the IP address of the new device and deliver the configuration information to the new device.

14. The configuration server according to claim 11, wherein the information obtaining module (51) comprises:
a third information obtaining unit (513), configured to receive a configuration advertisement sent by an uplink device of the new device, wherein the configuration advertisement comprises the attribute information of the new device and an IP address of the new device, and the attribute information of the new device may comprise at least one piece of the following information: a topological location of the uplink device and an ID of the new device; and
the configuration delivery module (53) comprises:
a third delivery unit (533), configured to communicate with the new device according to the IP address of the new device and deliver the configuration information to the new device.

15. A new device, comprising:
a notification module (61), configured to send attribute information of the new device to a configuration server, or advertise an uplink device, so that the uplink device sends the attribute information of the new device to the configuration server;
a receiving module (62), configured to receive configuration information delivered by the configuration server; and
a configuration module (63), configured to perform device configuration according to the configuration information.

16. An uplink device, comprising:
an obtaining module (71), configured to obtain attribute information of a new device; and
an advertisement module (72), configured to send an advertisement to a configuration server, wherein the advertisement comprises the attribute information of the new device.

17. A device configuration system, comprising the configuration server according to any one of claims 11 to 14, the new device according to claim 15, and the uplink device according to claim 16.
